# EUROPEAN PATENT APPLICATION

(11) **EP 2 857 954 A1**
(43) Date of publication of application: **08.04.2015**
(21) Application number: 14159276.6
(22) Date of filing: 12.03.2014
(51) Int. Cl.: G06F 3/12, G06F 17/30

(54) **Image forming apparatus, method of controlling thereof and computer-readable recording medium**

(30) Priority: 07.10.2013 KR 20130119227
(71) Applicant: Samsung Electronics Co., Ltd., Suwon-si Gyeonggi-do 443-742 (KR)
(72) Inventor: Um, Se-yong, Seoul (KR)
(74) Representative: Appleyard Lees

(57) **Abstract**

An image forming apparatus includes a communication interface to receive a web page related to execution of a function of the image forming apparatus through an Internet network, a user interface to display the received web page, and a web browser to retrieve an area related to the function from the received web page, and to display the retrieved area of the received web page on the user interface.

## Description

### CROSS-REFERENCE TO RELATED APPLICATIONS

This application claims priority from Korean Patent Application No. 10-2013-0119227, filed on October 7, 2013 in the Korean Intellectual Property Office, the disclosure of which is incorporated herein by reference in its entirety.

### BACKGROUND OF THE INVENTION

### 1. Field of the Invention

The present general inventive concept generally relates to an image forming apparatus, a method of controlling thereof, and a computer-readable recording medium, and more particularly, to an image forming apparatus, when it is necessary to display a web page related to a function of the image forming apparatus, capable of scrolling and displaying primary areas of the web page, a method of controlling thereof, and a computer-readable recording medium.

### 2. Description of the Related Art

In general, an image forming apparatus refers to an apparatus that prints out print data generated by a terminal device such as a computer on a recording paper. Such an image forming apparatus may be a copy machine, a printer, a facsimile, or a Multi Function Peripheral (MFP) where functions of the copy machine, the printer, and the facsimile are embodied in a single apparatus, for example.

A conventional image forming apparatus includes a web browser, and thus, is capable of downloading and displaying a web page on the Internet. However, a display device mounted on the image forming apparatus has a low-resolution small screen unlike a display device mounted on a terminal device such as a computer, and thus, is incapable of displaying an entire web page on the Internet on a screen thereof.

Hence, it is inconvenient for a user to scroll through the web page on a small screen in order to find a desired portion of the web page.

### SUMMARY OF THE INVENTION

According to the present invention there is provided an apparatus and method as set forth in the appended claims. Other features of the invention will be apparent from the dependent claims, and the description which follows.

The present general inventive concept provides an image forming apparatus, when it is necessary to display a web page related to a function of the image forming apparatus, which is capable of scrolling and displaying primary areas of the web page, a method of controlling thereof, and a computer-readable recording medium.

Additional features and utilities of the present general inventive concept will be set forth in part in the description which follows and, in part, will be obvious from the description, or may be learned by practice of the general inventive concept.

The foregoing and/or other features and utilities of the present general inventive concept may be achieved by providing an image forming apparatus including a communication interface to receive a web page related to execution of a function of the image forming apparatus through an Internet network, a user interface to display the received web page, and a web browser to retrieve an area related to the function from the received web page, and to display the retrieved area of the received web page on the user interface.

In this case, the user interface may receive a selection of a scan-to-cloud function. In addition, the communication interface may receive a web page for logging in a cloud server corresponding to the scan-to-cloud function from the cloud server.

The web browser may retrieve an identification (ID) input area and a password input area as an area related to a function from the received web page.

The image forming apparatus may further include a function unit to generate scan data by scanning a document and a controller to control the communication interface to transmit the generated scan data to the cloud server.

The web browser may render the received web page, and retrieve an area of a predetermined tag ID within the rendered web page as an area related to the function.

In addition, when a plurality of areas related to a function are retrieved from the received web page, the web browser may control the user interface to assign a priority order to each of the plurality of retrieved areas, and to sequentially display the plurality of retrieved areas according to the assigned priority order.

In addition, the web browser may control the user interface to display the retrieved area along with a keyboard area for receiving an input of characters.

In addition, the web browser may control the user interface to display the retrieved area along with information on a currently displayed area out of an entire web page.

The user interface may receive a selection of a cloud-to-print function. In addition, the communication interface may receive a web page for logging in a cloud server corresponding to the cloud-to-print function from the cloud server.

The foregoing and/or other features and utilities of the present general inventive concept may also be achieved by providing a method of controlling an image forming apparatus including receiving a web page related to execution of a function of the image forming apparatus through the Internet network, retrieving an area related to the function from the received web page, and displaying the retrieved area of the received web page.

In this case, the method may further include receiving a selection of a scan-to-cloud function. In addition, the receiving may include receiving a web page for logging in a cloud server corresponding to the scan-to-cloud function from the cloud server.

The retrieving may include retrieving an ID input area and a password input area as an area related to a function from the received web page.

The method may further include generating scan data by scanning a document and transmitting the generated scan data to the cloud server.

The retrieving may include rendering the received web page, and retrieving an area of a predetermined tag ID within the rendered web page as an area related to the function.

In addition, when a plurality of areas related to a function are retrieved from the received web page, the displaying may include assigning a priority order to each of the plurality of retrieved areas, and sequentially displaying the plurality of retrieved areas according to the assigned priority order.

The displaying may include displaying the retrieved area along with a keyboard area for receiving an input of characters.

In addition, the displaying may include displaying the retrieved area along with information on a currently displayed area out of an entire web page.

The method may further include receiving a selection of a cloud-to-print function. In addition, the receiving may include receiving a web page for logging in a cloud server corresponding to the cloud-to-print function from the cloud server.

The foregoing and/or other features and utilities of the present general inventive concept may also be achieved by providing computer readable recording medium having embodied thereon a computer program to execute a method of controlling an image forming apparatus connectable to an Internet network, the method including receiving a web page related to execution of a function of the image forming apparatus through the Internet network, retrieving an area related to the function from the received web page, and displaying the retrieved area of the received web page.

The foregoing and/or other features and utilities of the present general inventive concept may also be achieved by providing an image forming apparatus connectable to an Internet network, including a user interface to display a web page, and a web browser control the user interface to display a portion of the web page related to an execution of a function of the image forming apparatus.

The web browser may retrieve information related to the function to locate the portion of the web page to be displayed.

The displayed portion of the web page may be assigned a first priority and another portion of the web page may be assigned a second priority.

The another portion of the web page may be displayed when functions corresponding to the displayed portion of the web page are executed.

The user interface may further include at least one of an input area, a button, and a keyboard.

The image forming apparatus may further include a function unit to perform the function of the image forming apparatus.

### BRIEF DESCRIPTION OF THE DRAWINGS

These and/or other features and utilities of the present general inventive concept will become apparent and more readily appreciated from the following description of the embodiments, taken in conjunction with the accompanying drawings of which:
FIG. 1 is a block diagram illustrating a structure of an image forming apparatus according to an exemplary embodiment of the present general inventive concept;
FIG. 2 through FIG. 11 are various views illustrating displaying operations according to an exemplary embodiment of the present general inventive concept; and
FIG. 12 is a flow chart illustrating a method of displaying a web page according to an exemplary embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures.

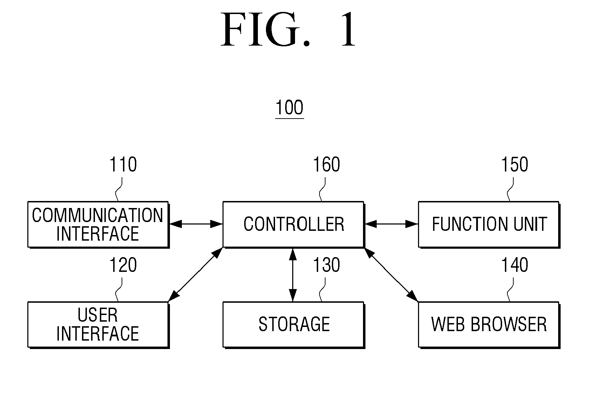

FIG. 1 is a block diagram illustrating a structure of an image forming apparatus 100 according to an exemplary embodiment of the present general inventive concept.

Referring to FIG. 1, the image forming apparatus 100 includes a communication interface 110, a user interface 120, a storage 130, a web browser 140, a function unit 150, and a controller 160. The image forming apparatus 100 may be a printer, a scanner, a copy machine, a facsimile, or a Multi Function Peripheral (MFP) where functions of the aforesaid devices are embodied in a single apparatus, and may be referred to as an image scanning apparatus when it provides a scan function.

The communication interface 110 may be connected to a terminal device (not illustrated) such as a Personal Computer (PC), a laptop computer, a Personal Digital Assistant (PDA), a digital camera, a server, etc., but is not limited thereto, and may receive print data to be printed in the image forming apparatus 100 from the terminal device. In addition, the communication interface 110 may transmit a scan image scanned by the image forming apparatus 100 to the terminal device. The communication interface 110 may be provided to connect the image forming apparatus 100 to an external device, and may be connected to the terminal device through a Universal Serial Bus (USB) or a wireless port as well as a Local Area Network (LAN) and the Internet network.

The communication interface 110 receives a web page though the Internet network. In order to receive a web page necessary to execute a particular function of the image forming apparatus 100, the communication interface 110 may send a Hypertext Transfer Protocol (HTTP) request to a web server, and receive a web page in response to the request. For example, the communication interface 110 may receive a web page to log into a cloud server.

The communication interface 110 transmits account information. In detail, the communication interface 110 may transmit account information that a user inputted on the received web page to the cloud server.

The communication interface 110 may receive a print command and a scan command from an external terminal device. More specifically, the communication interface 110 may receive a scan command or a print command from the cloud server.

The user interface 120 may include several function keys to allow a user to set or to select various functions supported by the image forming apparatus 100, and may display various information provided by the image forming apparatus 100. The user interface 120 may be implemented as a device such as a touch screen, and may be implemented as a device where functions of a mouse and a monitor are combined.

In addition, the user interface 120 receives a request to execute a function that requires a received web page. More specifically, the user interface 120 may receive a request to execute of a scan-to-cloud function or a cloud-to-print function that requires a web page to be received by a user. Herein, the function that requires a received web page may be a scan-to-cloud function or a cloud-to-print function. In detail, the scan-to-cloud function refers to a function that generates scan data by scanning a document, and stores the generated scan data in a user account in a cloud server. The cloud-to-print function refers to a function that prints out a document stored in the user account in the cloud server. Meanwhile, although the exemplary embodiment of the present general inventive concept described the aforementioned two functions only, any other functions that require a received web page may be employed.

In addition, the user interface 120 displays a received web page. To be specific, the user interface 120 may receive and display an output image of a web page generated by the web browser 140, which will be described below. That is, the user interface 120 may display primary areas retrieved from the received web page by the web browser 140, which will be described below. At this point, the user interface 120 displays a web page according to a resolution of the received web page. That is, the user interface 120 may display the received web page by reducing its size, or may display the received web page according to the resolution supported by a display device without enlarging its size.

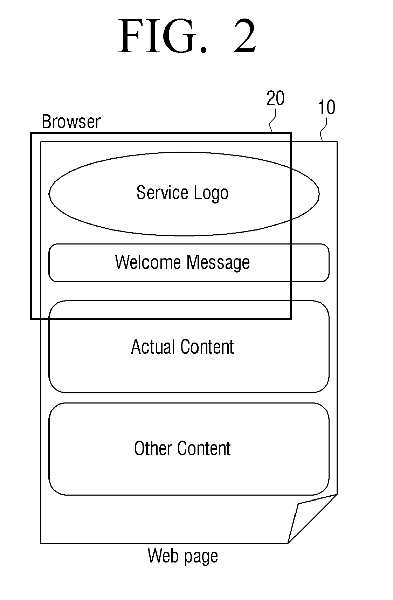

In addition, the user interface 120 may display the received web page along with information on a currently displayed area out of the entire web page (i.e., information as to where the currently displayed area is located in the entire web page. Such information may be represented by graphics, or may be text information (e.g., 1/3)). Alternatively, the user interface 120 may display the received web page along with a keyboard area to receive an input of characters. At this point, the displayed keyboard area may be a "qwerty" keyboard, but is not limited thereto. Various screens that may be displayed in the user interface 120 will be described below by referring to FIG. 2 through FIG. 11.

The user interface 120 receives an input of particular information (e.g., account information) on the displayed web page. For example, the user interface 120 may receive an input of ID information and password information necessary to access a cloud server from a user.

In addition, the user interface 120 may display a process result related to a selected function. For instance, when a user requests that the user interface 120 executes the scan-to-cloud function, the user interface 120 may display a log-in result and a file transmission result.

The user interface 120 may display a scanned image. To be specific, the user interface 120 may display a scanned image generated by a pre-scan job through a preview pane, or may display a scan image generated by a scan job.

The storage 130 stores print data received from the communication interface 110. In addition, the storage 130 stores a web page received from the communication interface 110. The storage 130 may also store a scan image or a rendering image generated by the function unit 150.

The storage 130 may be implemented as an internal recording medium embedded within the image forming apparatus 100 or an external recording medium such as a removable disk including a USB memory, a recording medium connected to a host, a web server on a network, etc., but is not limited thereto.

The web browser 140 retrieves an area related to a function from the received web page. To be specific, the web browser 140 may render the received web page, and retrieve an area of a predetermined tag ID within the rendered web page as an area related to the function. For example, when the received web page is a web page to log into a cloud server, primary areas related to the log-in operation may include an ID input area and a password input area. Accordingly, by rendering the received web page and retrieving an <ID> tag ID and a <PASSWORD> tag ID from the rendered web page, the web browser 140 may retrieve a web page area corresponding to the retrieved tag IDs as a primary area related to a function.

The web browser 140 controls the user interface to display the retrieved area of the received web page. To be specific, when the received web page is displayed, the web browser 140 may control the user interface 120 to display the retrieved area of the received web page in place of a left upper portion of the web page. At this point, the user interface 120 may display the received web page along with information on the currently displayed area out of the entire web page or a keyboard area to receive an input of characters.

Meanwhile, when a plurality of areas related to a function are retrieved from the received web page, the web browser 140 may control the user interface to assign a priority order to each of the plurality of retrieved areas, and to sequentially display the plurality of retrieved areas according to the assigned priority order.

The function unit 150 performs functions supported by the image forming apparatus 100. For instance, when the image forming apparatus 100 is capable of performing a print job, the function unit 150 may print out print data received from the communication interface 110. When the image forming apparatus 100 may perform a scan job, the function unit 150 may generate a scan image by scanning a document. Meanwhile, although the exemplary embodiment of the present general inventive concept described only the scan job and the print job as a function of the function unit 150, the function unit 150 may further include a facsimile job and other common functions of an image forming apparatus in implementation.

The controller 160 controls each component of the image forming apparatus 100. To be specific, when a selection of a function that requires a received web page is received through the user interface 120, the controller 160 may control the communication interface 110 to receive a web page corresponding to the function.

In addition, the controller 160 may control the web browser 140 and the user interface 120 to retrieve the primary areas of the received web page and to display the retrieved primary areas. In addition, the controller 160 may control the function unit 150 to perform a function requested by a user. For example, when the user selects the scan-to-cloud function, the controller 160 may control the function unit 150 to generate a scan image by a scan job, and may control the communication interface 110 to transmit the generated scan image to the cloud server that the user selects.

As stated above, the image forming apparatus 100 according to an exemplary embodiment of the present general inventive concept displays the primary areas of the received web page. Hence, a user is able to obtain necessary information or to perform a log-in operation without performing a scroll operation.

Meanwhile, with reference to FIG.1, although it was described that the image forming apparatus 100 includes the separate web browser 140 that renders the received web page, the web browser may be configured by being combined with other components. For example, the controller 160 may be implemented to have a web browser so as to render the received web page, or the user interface 110 may be implemented to have the web browser so as to render the received web page and display the rendered result immediately.

FIG. 2 through FIG. 11 are various views illustrating displaying operations according to an exemplary embodiment of the present general inventive concept.

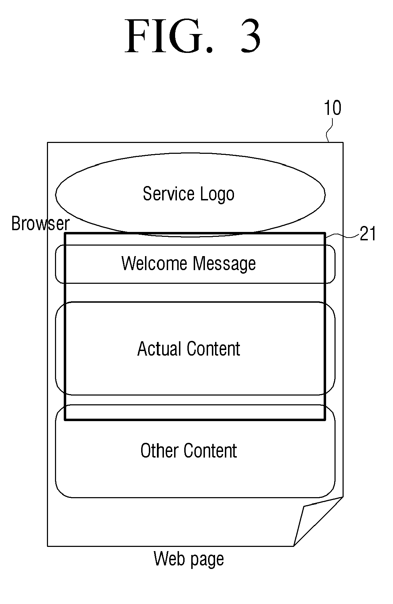

To be specific, FIG. 2 and FIG. 3 are the views illustrating methods of displaying a common web page in the related art and the present exemplary embodiment.

Referring to FIG. 2, a common web page is designed to be compatible with a high-resolution screen of a PC or a mobile device, while an image forming apparatus 100 that includes a web browset screen that supports a lower resolution displays only a portion of the web page as represented by an area 20 in FIG. 2. In FIG. 2, the area 20 displays a service logo and a welcome message.

When such an image as illustrated in area 20 on the web browser screen of the image forming apparatus 100 of FIG. 2 is displayed to a user, the user may not understand the purpose of the web page or may not see important portions thereof. As a result, the user may need to scroll the through the entire web browser screen in order to find important data or important sections of the web page that the user does not see within area 20. For example, when the user selects the scan-to-cloud function, the image forming apparatus 100 displays a web page to log into a cloud server provided by the cloud server. At this point, when the web page displays only a service logo of the cloud server and a welcome message to provide the user access to the cloud server, the user may not recognize that he/she selected an incorrect function. That is, the web page is supposed to receive user input of log-in information through the web page, but when the web page fails to correctly display an area to input the log-in information, a user must manually seek out the area, which adds to user inconvenience.

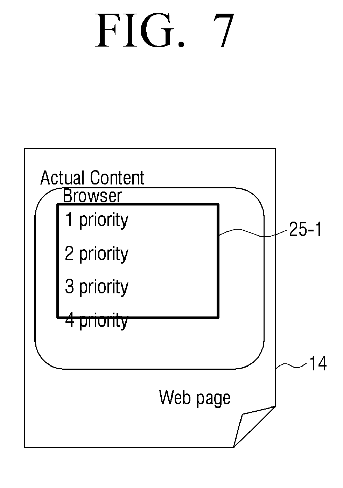

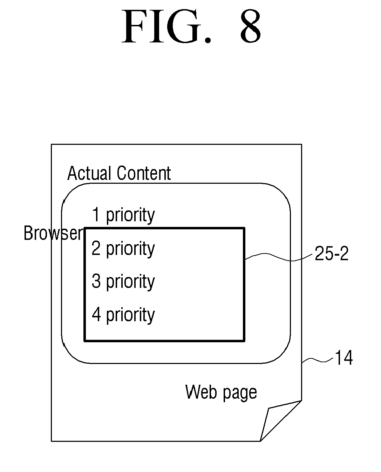

Hence, the exemplary embodiment of the present general inventive concept of FIG. 3 illustrates an operation of retrieving a primary area from a web page 10, and an operation of displaying an area 21 including the retrieved area out of the received web page. That is, the web browser 140 may find an area including effective information by rendering the received web page. For example, when the received web page is a web page to receive log-in information, the primary areas are a user ID input area and a user password input area. Meanwhile, a plurality of primary areas may be retrieved from a web page. In this case, the web browser 140 may assign a priority order to each of the retrieved primary areas, and display the retrieved primary areas according to the assigned priority order. These operations will be described below by referring to FIG. 7 and FIG. 8.

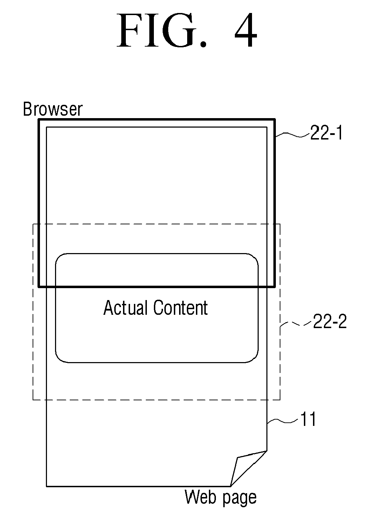

FIG. 4 is a view illustrating an example of a web page that is not displayed within a single screen due to its long length. To be specific, when displaying a received web page 11, the related art displays a first area 22-1, while the exemplary embodiment of the present general inventive concept displays a second area 22-2 including actual contents via a scroll operation.

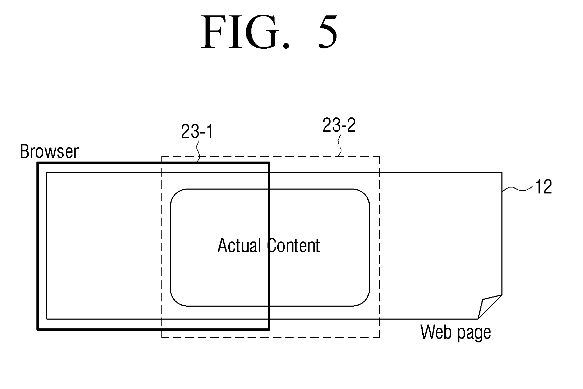

FIG. 5 is a view illustrating an example of a web page that is not displayed in a single screen due to its wide breadth (i.e., width). To be specific, when displaying a received web page 12, the related art displays a third area 23-1, while the exemplary embodiment of the present general inventive concept retrieves an area including the actual contents, and displays a fourth area 23-2 via a scroll operation.

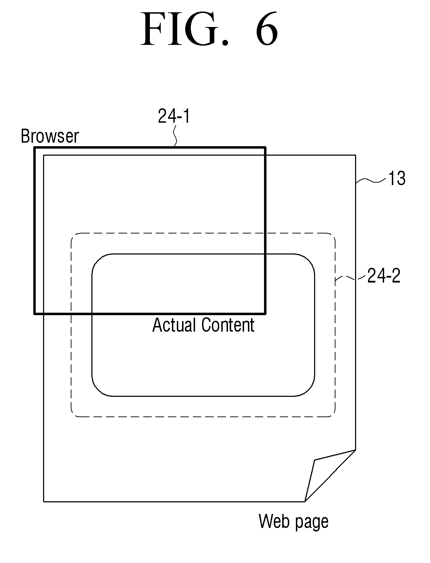

FIG. 6 is a view illustrating an example of a web page that is not displayed on a single screen due to its long length and wide breadth. To be specific, when displaying a received web page 13, the related art displays a fifth area 24-1, while the exemplary embodiment of the present general inventive concept displays a sixth area 24-2 including the actual contents via a scroll operation.

FIG. 7 and FIG. 8 are the views illustrating a method of displaying a web page 14 when the web page 14 includes a plurality of primary areas and the retrieved primary areas are not displayed on a single screen.

For example, it is assumed that the web page 14 is designed to execute a log-in function. In this case, an ID information input area to allow a user to input a user ID to log into a server has a first priority, a password input area to allow a user to input a password to log into the server has a second priority, and an area to transmit the input information (i.e., the user name and password) to the server has a third priority. When a screen 25-1 fails to display all the above information together as illustrated in FIG. 7, the web browser 140 may display an item having a highest priority first, while allowing as many items to be displayed as possible.

As illustrated in FIG. 7, when a user completes an interaction job corresponding to the items each having the particular priority orders while the screen 25-1 displays only a portion of the web page 14, the controller 160 may control the web browser 140 to automatically change the screen 25-1 to a screen 25-2 display an information item having a next priority order as illustrated in FIG. 8. More specifically, the screen 25-1 of FIG. 7 displays jobs having priorities 1, 2, and 3, while the scree 25-2 of FIG. 8 displays jobs having priorities 2, 3, and 4.

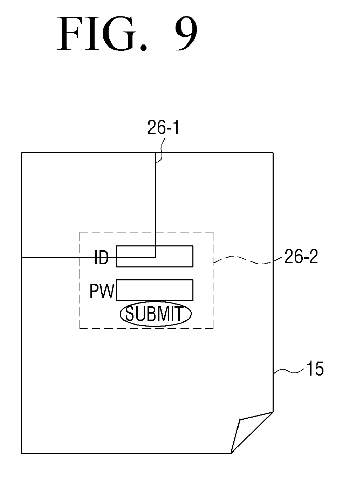

FIG. 9 through FIG. 11 are views illustrating an operation of the web browser 140 when a log-in web page is received.

Referring to FIG. 9, a web page 15 includes a user input area 26-2 that may include an area to receive an ID input, an area to receive a password input, and an area to receive a command input to transmit the input information to a server. FIG. 9 specifically illustrates a "SUBMIT" button that the user can click on or touch to perform a submission of the ID and password inputs, respectively.

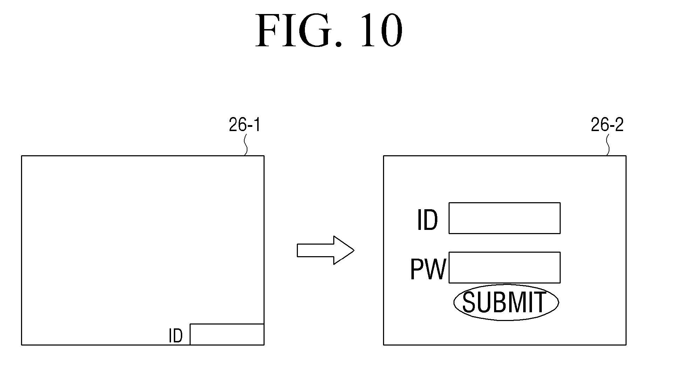

Meanwhile, when a size of screen (or resolution) that is displayable in the user interface 120 is equal to an area 26-1, the related art displays a screen as represented by a left drawing of FIG. 10. However, in this case, a user may find it difficult to recognize that an ID and password must be input. Moreover, even when the user may be able to recognize that an ID and password must be input, it is not easy to input an ID and password due to their lack of visibility on the screen.

Thus, the web browser 140 according to the exemplary embodiment of the present general inventive concept may render the received web page, retrieve an ID tag ID and a password tag ID from the rendered web page, retrieve the areas corresponding to the two tag IDs as a primary area, generate a user interface window for the areas, and provide the user interface 120 with the generated user interface window. Hence, the user is able to view a screen of the user input area 26-2 as illustrated in a right drawing of FIG. 10.

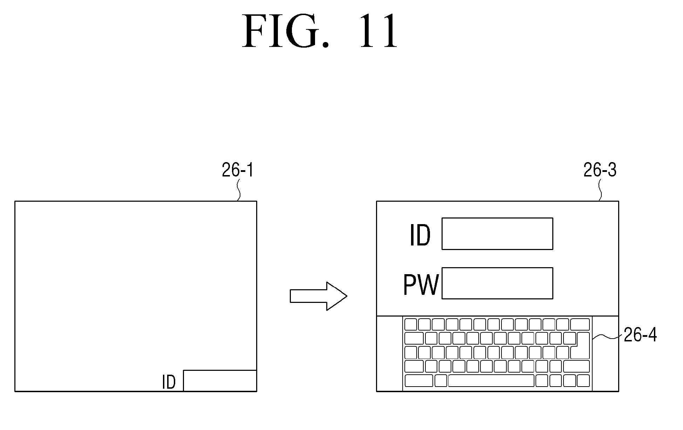

As illustrated in FIG. 11, when an image forming apparatus 100 does not include a physical "SUBMIT" button along with input fields of ID and password, the web browser 140 may display the retrieved primary areas along with a screen keyboard as represented by an input field screen 26-3 and a keyboard screen 26-4. In this case, it is desirable that the screen is a touch screen, but any other screen including an input device such as a mouse may be employed.

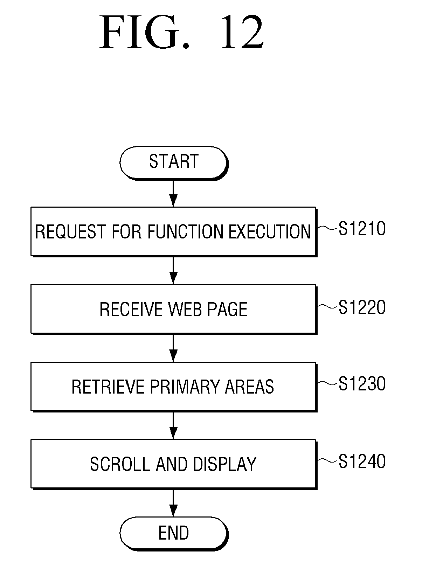

FIG. 12 is a flow chart illustrating a method of displaying a web page according to an exemplary embodiment of the present general inventive concept.

Referring to FIG. 12, execution of a function that requires a received web page is requested (S1210). To be specific, execution of the scan-to-cloud function or the cloud-to-print function that requires a received web page may be requested by a user. Herein, the scan-to-cloud function refers to a function that generates scan data by scanning a document, and stores the generated scan data in a user account in a cloud server. The cloud-to-print function refers to a function that prints out a document stored within the user account in the cloud server. Meanwhile, although the exemplary embodiment of the present general inventive concept describes the aforementioned two functions only, any other functions that require a received web page may be employed.

When a function that requires a received web page is selected, a web page corresponding to the function is received (S1220). More specifically, a log-in web page to access a cloud server corresponding to the scan-to-cloud function or the cloud-to-print function may be received from the cloud server. Meanwhile, the exemplary embodiment of the present general inventive concept describes that a web page is received from a cloud server, but when a cloud server that stores data and an authentication server are implemented separately, a web page may be received from another server different from the cloud server.

Areas related to a function are retrieved from the received web page (S1230). For example, primary areas related to a log-in operation are the ID input area and the password input area. Accordingly, by rendering the received web page and retrieving an <ID> tag ID and a <PASSWORD> tag ID from the rendered web page, a web page area corresponding to the retrieved tag IDs may be retrieved as a primary area related to a function.

Referring to FIGS. 11 and 12, the retrieved area of the received web page is displayed on a screen of the image forming apparatus 100 (S1240). More specifically, when the received web page is displayed, only the retrieved area, such as the user input area 26-2, the input field screen 26-3, and the keyboard screen 26-4, may be displayed instead of a left upper portion, such as the area 26-1, of the web page. Furthermore, specific information corresponding to the displayed portion of the entire web page or a keyboard area to receive an input of characters may be displayed as well.

Accordingly, a method of controlling an image forming apparatus according to an exemplary embodiment of the present general inventive concept includes displaying the primary areas of the received web page, and thus, a user is able to obtain necessary information or to log into a server without performing a scroll operation. The method in FIG. 12 may be executed in an image forming apparatus having the configuration illustrated in FIG. 1, and may be also executed in an image forming apparatus having another configuration.

The present general inventive concept, as described above, can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image forming apparatus connectable to an Internet network, comprising:
a communication interface to receive a web page related to execution of a function of the image forming apparatus through the Internet network;
a user interface to display the received web page; and
a web browser to retrieve an area related to the function from the received web page, and to display the retrieved area of the received web page on the user interface.

2. The apparatus as claimed in claim 1, wherein the user interface receives a selection of a scan-to-cloud function, and
wherein the communication interface receives a web page to log into a cloud server corresponding to the scan-to-cloud function from the cloud server.

3. The apparatus as claimed in claim 2, wherein the web browser retrieves an identification (ID) input area and a password input area as an area related to a function from the received web page.

4. The apparatus as claimed in claim 2 or claim 3 further comprising:
a function unit to generate scan data by scanning a document; and
a controller to control the communication interface to transmit the generated scan data to the cloud server.

5. The apparatus as claimed in any one of claims 1 to 4, wherein the web browser renders the received web page, and retrieves an area of a predetermined tag ID within the rendered web page as an area related to the function.

6. The apparatus as claimed in any one of claims 1 to 5, wherein when a plurality of areas related to a function are retrieved from the received web page, the web browser controls the user interface to assign a priority order to each of the plurality of retrieved areas, and to sequentially display the plurality of retrieved areas according to the assigned priority order.

7. The apparatus as claimed in any one of claim 1 to 6, wherein the web browser controls the user interface to display the retrieved area along with a keyboard area for receiving an input of characters.

8. The apparatus as claimed in any one of claims 1 to 7, wherein the web browser controls the user interface to display the retrieved area along with information on a currently displayed area out of an entire web page.

9. The apparatus as claimed in claim 1, wherein the user interface receives a selection of a cloud-to-print function, and
wherein the communication interface receives a web page for logging in a cloud server corresponding to the cloud-to-print function from the cloud server.

10. A method of controlling an image forming apparatus connectable to an Internet network, the method comprising:
receiving a web page related to execution of a function of the image forming apparatus through the Internet network;
retrieving an area related to the function from the received web page; and
displaying the retrieved area of the received web page.

11. The method as claimed in claim 10 further comprising:
receiving a selection of a scan-to-cloud function,
wherein the receiving comprises receiving a web page for logging in a cloud server corresponding to the scan-to-cloud function from the cloud server.

12. The method as claimed in claim 11 further comprising:
generating scan data by scanning a document; and
transmitting the generated scan data to the cloud server.

13. The method as claimed in any one of claims 10 to 12, wherein the retrieving comprises rendering the received web page, and retrieving an area of a predetermined tag ID within the rendered web page as an area related to the function.

14. The method as claimed in anyone of claims 10 to 13, wherein when a plurality of areas related to a function are retrieved from the received web page, the displaying comprises assigning a priority order to each of the plurality of retrieved areas, and sequentially displaying the plurality of retrieved areas according to the assigned priority order.

15. The method as claimed in claim 10 further comprising:
receiving a selection of a cloud-to-print function,
wherein the receiving comprises receiving a web page for logging in a cloud server corresponding to the cloud-to-print function from the cloud server.
